# EUROPEAN PATENT SPECIFICATION

(11) **EP 2 654 385 B1**
(45) Date of publication and mention of the grant of the patent: **08.11.2017**
(21) Application number: 12164384.5
(22) Date of filing: 17.04.2012
(51) Int. Cl.: H05B 41/288

(54) **An apparatus, a method, an arrangement and a computer program for controlling operation of a power supply circuit**
Vorrichtung, Verfahren, Anordnung und Computerprogramm zum Steuern des Betriebs einer Netzteilschaltung
Appareil, procédé, agencement et programme informatique pour contrôler le fonctionnement d'un circuit d'alimentation électrique

(43) Date of publication of application: 23.10.2013
(73) Proprietor: Helvar Oy Ab, 02150 Espoo (FI)
(72) Inventor: Perkiö, Tuomas, FI-02150 Espoo (FI); Vihinen, Hannu, FI-02150 Espoo (FI)
(74) Representative: Berggren Oy, Helsinki & Oulu

(56) References cited:
- WO-A2-2010/084444
- JP-A- 2008 293 730
- US-A1- 2002 190 665
- US-A1- 2005 035 729

## Description

### FIELD OF THE INVENTION

The invention relates to a control of a power supply circuit. In particular, the invention relates to an apparatus, a method, an arrangement and a computer program for controlling operation of a power supply circuit arranged to supply power to a load connected in parallel with a capacitive device. As an example, the inventive apparatus, method, arrangement and/or the computer program may be employed to control operation of a power supply circuit configured to supply power to a lighting element, such as a fluorescent lamp, high-intensity discharge (HID) lamp, a light-emitting diode (LED), etc.

### BACKGROUND OF THE INVENTION

A power converter circuit may be used for example to convert direct current (DC) or alternating current (AC) from one voltage level to another, to convert DC to AC, or to convert AC to DC.

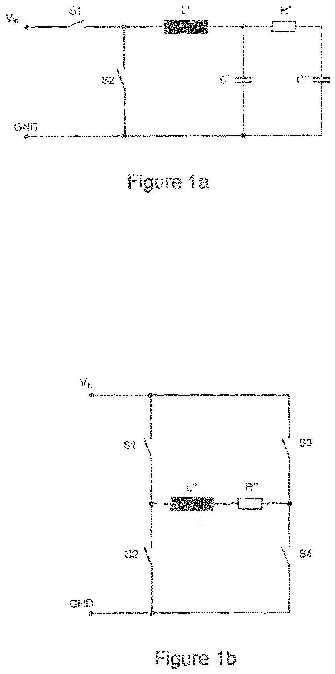

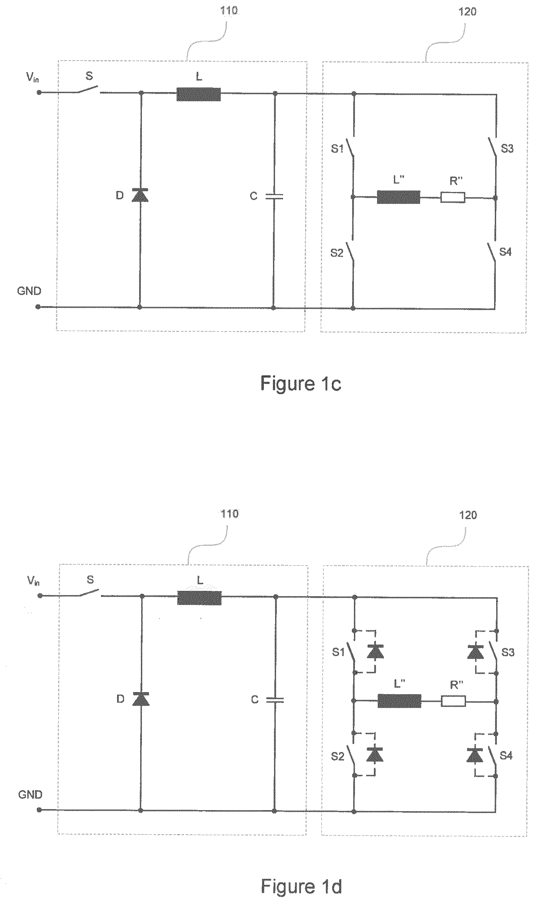

An example of a power converter circuit is a half-bridge circuit, which can be used for example to convert DC to AC. A basic structure of a half-bridge circuit is illustrated in Figure 1 a. As a brief summary of the operation, the pair of switches S1 and S2 are operated in such a manner that when the switch S1 is in closed state, the switch S2 is in open state and vice versa. When the switch S1 is in closed state and the switch S2 is in open state, electric current flows through the switch S1 and through the inductor L' towards the load represented by the resistor R'. Conversely, when the switch S1 is in open state and the switch S2 is in closed state, electric current flows via the inductor L' through the switch S2 toward the ground potential GND. Moreover, the switches S1 and S2 may not be in closed state at the same time, since it would cause a short circuit on the input voltage source represented by the potentials Vᵢₙ and GND. Operating the switches S1 and S2 in a suitable manner results in a desired alternating electric current via the inductor L'- and hence to the load represented by a resistor R'. The switch S1 may be considered as a high side switch of the half-bridge circuit due to being connected to the voltage source Vᵢₙ in a high potential whereas the switch S2 connected to a low potential represented by the ground potential GND may be considered as a low side switch.

Another example of a power converter circuit is a full bridge circuit, which can also be used to convert DC to AC. A basic structure of a full bridge circuit is illustrated in Figure 1 b. As a brief summary of the operation, the first pair of switches S1 and S2 and the second pair of switches S3 and S4 are operated in such a way that when the switches S1 and S4 are in closed state, the switches S2 and S3 are in open state - and vice versa. The resistor R" represents a load connected/coupled to the full bridge circuit via the inductor L". When the switches S1 and S4 are in closed state, electric current flows from Vᵢₙ via the switch S1, the inductor L" the resistor R" and the switch S4 towards GND, whereas when the switches S2, and S3 are in closed state, electric current flows from Vᵢₙ via the switch S3, the resistor R", the inductor L" and the switch S2 towards GND. Moreover, the switches of a pair, i.e. the switches S1 and S2 and/or the switches S3 and S4, may not be in closed state at the same time, since it would cause a short circuit on the input voltage source represented by the potentials Vᵢₙ and GND. Along the lines of terminology used with the half-bridge circuit, the switches S1 and S3 may be considered as high side switches of the full bridge circuit, whereas the switches S2 and S4 may be considered as low side switches of the full bridge circuit.

Figure 1c illustrates an exemplifying arrangement of supplying power to a load by using a full bridge circuit as an example of the load. In particular, a buck converter circuit 110 is used to supply power to a full bridge circuit 120. The buck converter circuit 110 may be used to convert DC from one voltage level to another. As a brief summary of the operation of the exemplifying buck converter circuit 110, when a switch S is in closed state, electric current flows through the switch S and through the inductor L, thereby supplying power to the load and charging the capacitor C connected in parallel with the load. When the switch S is in open state, the capacitor C discharges and the electric current flows through the diode D to the inductor L, thereby supplying power to the load. Operating the switch S in a suitable manner results in a desired (average) electric current to be provided via the inductor L to the load coupled to the buck converter circuit 110 represented by the full bridge circuit 120.

Whereas in theory setting a switch of a pair of switches of a power converter circuit into open state and setting the other switch of the pair into closed state may occur simultaneously, in practice a small delay, typically in order of microseconds, is required and/or applied between opening a switch of a pair and closing another switch of the pair in order to guarantee that the switches of the pair are not simultaneously in closed state. This time when neither of the switches of a pair is in closed state may be referred to as an idle state, idle time or dead time of the power converter circuit. This is also a period of time when the power converter circuit does not supply power to the load connected or coupled thereto and hence does not consume power supplied at the input of the power converter circuit. Conceptually, a power converter circuit may be considered to operate in a normal state when either of the switches of a pair is in closed state as opposed to idle state during which neither of the switches of the pair is in closed state.

Hence, during a period of idle time the load coupled to the buck converter circuit 110 does not consume power, whereas the buck converter circuit 110 nevertheless keeps supplying power, thereby continuously charging the capacitor C. Consequently, when the full bridge circuit 120 is again switched back to normal operation, i.e. after the idle time, an undesired current spike may be provided to the resistor R" representing the load conn ected/cou pled to the full bridge circuit 120. Such a current spike, if not compensated properly, may cause malfunction or even breakdown of the load or another component connected/coupled to the full bridge circuit 120.

In the exemplifying arrangement of Figure 1c the energy stored in the inductor L" may cause a further increase of voltage in the capacitor C of the buck converter circuit 110 during the idle time due to the switches S1, S2, S3 and S4 typically being implemented using transistors, each of which may include a diode connected in parallel therewith, as illustrated in Figure 1d. Such diode may be employed to protect the respective switch from an excess voltage when the switch is in open state, e.g. from a voltage spike that may result in from sudden switching off the power from an inductive load. Such a voltage spike may originate e.g. the inductor L" due to all switches S1, S2, S3 and S4 of the full bridge circuit 120 being simultaneously in open state upon entering a period of idle time. Such an arrangement may provide a scenario where instead of the load consuming power supplied thereto the load may actually feed back power stored in the inductor L" via (a pair of) the diodes connected in parallel with the switches S1, S2, S3 and S4, resulting in further increase of voltage in the capacitor C.

While the exemplifying arrangements illustrated in Figures 1c and 1d employ the buck converter circuit 110 as a power supply used to supply power to the full bridge circuit 120, a similar challenge with a current spike applies to a circuitry comprising any power supply providing power to a load connected in a parallel to a capacitive device where there are periods of time when the load does not consume power supplied thereto, the full bridge circuit 120 hence representing an example of such a load. In particular, this applies also to an arrangement where instead of the full bridge circuit 120 a power converter circuit of another type involving a switching arrangement along the lines described hereinbefore resulting in an idle time is employed.

The effect of such a current spike may be at least partially mitigated by suitable provisioning of components of the circuitry, for example in the exemplifying arrangement of Figure 1c this may be done by employing an inductor L" tolerating sufficiently high levels of electric current and/or by employing a capacitor C having a sufficiently high capacitance. However, such solution is not satisfactory for all purposes since it would imply usage of more expensive components typically also having a larger size.

Document US 2002/0190665 A1 discloses a circuit arrangement and control thereof for igniting a high intensity discharge lamp, for reducing current stresses imposed on semiconductor devices during a popularity transition of a lamp voltage or lamp current, and for maintaining a parasitic current within an envelope of a square wave lamp current. The high discharge current of a buck filter capacitor is reduced by gradually discharging the energy stored in the buck filter capacitor back into the bus line.

Document US 2005/0035729 A1 discloses a power controller for fluorescent lamp dimming. A variable dead time, in other words a period of cycle in which none of the switches of a bridge circuit are driven into conduction, is provided to provide protection for switching devices without deteriorating the performance of the bridge circuit by limiting the duty cycle.

Document WO 2010/084444 A2 discloses a disconnecting circuit for a power converter supplying power to a load device. The disconnecting circuit comprises a switch arranged in series with the power converter to disconnect the supply of power to the load device. A sense circuit supplies a sensed value indicating an operation mode of the load device. A controller receives the sensed value to control the switch to disconnect the supply of the power from the load device when the sensed value drops below a reference level indicating a standby mode of the load device.

Document JP 2008 293730 discloses a power supply circuit configured to supply power to a lighting load.

### SUMMARY OF THE INVENTION

It is an object of the present invention to provide an arrangement, a method, and a computer program for alleviating the effect of a current spike that may be supplied to a load coupled to the power converter circuit in parallel with a capacitive device where there are periods of time when the load does not consume power supplied thereto.

The objects of the invention are reached by an arrangement, a method, and a computer program as defined by the respective independent claims.

According to a first aspect of the invention, an arrangement is provided, the arrangement comprising a power supply circuit, a control apparatus for driving the power supply circuit, a load and a capacitive device. The power supply circuit is configured to supply power to the load, and the load is connected in parallel with the capacitive device. The capacitive device is configured to act as an energy storage configured to receive and temporarily store energy provided by the power supply circuit. The load comprises a bridge circuit comprising at least one pair of switches, the bridge circuit being configure to supply power to a second load. The control apparatus comprises a detector configured to detect a period of idle time of the load, wherein the period of idle time corresponds to a period of time when none of the switches of said at least one pair of switches are in closed state, and a controller configured to, in response to the period of idle time being detected, control the power supply circuit so as to temporarily limit the power supplied from the power supply circuit to the load and hence to the capacitive device. According to a second aspect of the invention a method for driving a power supply circuit configured to supply power to a load is provided. The load is connected in parallel with a capacitive device configured to act as an energy storage configured to receive and temporarily store energy provided by the power supply circuit and the load comprises a bridge circuit comprising at least one pair of switches, the bridge circuit being configured to supply power to a second load. The method comprises detecting a period of idle time of the load, wherein the period of idle time corresponds to a period of time when none of the switches of said at least one pair of switches are in closed state, and temporarily controlling the power supply circuit so as to limit, in response to the period of idle time being detected, the power supplied from the power supply circuit to the load and hence to the capacitive device.

According to a third aspect of the invention, a computer program for driving a power supply circuit configured to supply power to a load is provided, which load is connected in parallel with a capacitive device configured to act as an energy storage configured to receive and temporarily store energy provided by the power supply circuit and which load comprises a bridge circuit comprising at least one pair of switches, the bridge circuit being configured to supply power to a second load. The computer program includes one or more sequences of one or more instructions which, when executed by one or more processors, cause an apparatus to at least detect a period of idle time of the load, wherein the period of idle time corresponds to a period of time when none of the switches of said at least one pair of switches are in closed state, and temporarily controlling the power supply circuit so as to limit, in response to the period of idle time being detected, the power supplied from the power supply circuit to the load and hence to the capacitive device.

The computer program may be embodied on a volatile or a non-volatile computer-readable record medium, for example as a computer program product comprising at least one computer readable non-transitory medium having program code stored thereon, the program which when executed by an apparatus cause the apparatus at least to perform the operations described hereinbefore for the computer program according to the fifth aspect of the invention.

The verb "to comprise" and its derivatives are used in this patent application as an open limitation that does not exclude the existence of also unrecited features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following de tailed description of specific embodiments when read in connection with the accompanying drawings.

### BRIEF DESCRIPTION OF THE DRAWINGS

Figure 1a schematically illustrates a half-bridge circuit.
Figure 1b schematically illustrates a full bridge circuit.
Figure 1c schematically illustrates an arrangement comprising a buck converter and a full bridge circuit.
Figure 1d schematically illustrates an arrangement comprising a buck converter and a full bridge circuit.
Figure 2 schematically illustrates an apparatus in accordance with an embodiment of the invention as part of an exemplifying arrangement.
Figure 3 schematically illustrates an apparatus in accordance with an embodiment of the invention as part of an exemplifying arrangement.
Figure 4 schematically illustrates an apparatus in accordance with an embodiment of the invention as part of an exemplifying arrangement.
Figure 5 schematically illustrates an apparatus in accordance with an embodiment of the invention as part of an exemplifying arrangement.
Figure 6 schematically illustrates an apparatus in accordance with an embodiment of the invention as part of an exemplifying arrangement.
Figure 7 schematically illustrates an apparatus in accordance with an embodiment of the invention as part of an exemplifying arrangement.
Figure 8 schematically illustrates an apparatus in accordance with an embodiment of the invention as part of an exemplifying arrangement.
Figure 9 schematically illustrates an apparatus in accordance with an embodiment of the invention as part of an exemplifying arrangement.
Figure 10 illustrates a method in accordance with an embodiment of the invention.
Figure 11 illustrates a method in accordance with an embodiment of the invention.

### DETAILED DESCRIPTION

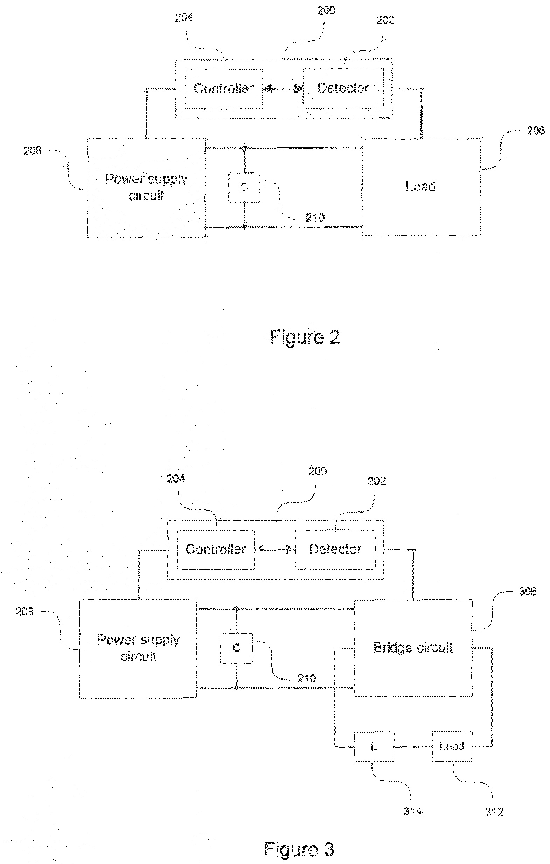

Figure 2 schematically illustrates a control apparatus 200 in accordance with an embodiment of the invention as part of an exemplifying arrangement. The control apparatus 200 comprises a detector 202 and a controller 204, the detector 202 and the controller 204 being operatively connected or coupled to each other. The control apparatus 200 may be connected or coupled to a load 206 and to a power supply circuit 208. In other words the control apparatus 200 is connectable to the load 206 and to the power supply circuit 208. The power supply circuit 208 is configured to supply power to the load 206 and is connected or coupled to the load 206 in parallel with a capacitive device 210. The capacitive device 210 may be, alternatively, considered as part of the power supply circuit 208 or as part of the load 206.

The capacitive device 210 is configured to act as an energy storage configured to receive and temporarily store the energy provided by the power supply circuit 208. The capacitive device 210 may be for example a single capacitor or a number of capacitors connected in parallel to provide a capacitive device of desired capacity for storing energy provided by the power supply circuit 208. Alternatively, an arrangement different from capacitor or a number of capacitors connected in parallel may be used as the energy storage.

The load 206 may be any load exhibiting, preferably on regular basis, periods of time when the load 206 does not consume power supplied thereto by the power supply circuit 208. Such periods of time may be referred to as periods of idle time (of the load 206) as described hereinbefore. The periods of idle time may occur, for example, at essentially regular intervals and the periods of idle time may have essentially fixed duration. On the other hand, the periods of idle time may occur according to an unpredictable pattern and have a varying - and possibly unpredictable - duration.

As described hereinbefore, during a period of idle time the load 206 does not consume power, whereas the power supply circuit 208 keeps supplying power, thereby continuously charging the capacitive device 210. Consequently, when the load 206 again starts consuming power after the period of idle time, an excess charge in the capacitor 210 may result in an undesired current spike to be provided to the load 206. However, the control apparatus 200 is configured to prevent or mitigate the current spike and an effect thereof.

The power consumed by the load 206 may be at least in part dependent on a voltage of the load 206. In particular, due to an essentially constant (average) electric current provided at the output of the power supply circuit 208 a low voltage across the load 206 may result in relative decrease in the power consumed by the load 206, which in turn results in relative increase in the excess power supplied by the power supply circuit 208, thereby making the effect resulting in an (excess) charge in the capacitor 210 even more pronounced compared to a case with a high(er) voltage in the load 206.

The detector 202 is configured to detect a period of time when the load 206 does not consume power, i.e. a period of idle time. The detector 202 may be configured to provide an indication of the period of idle time, e.g. starting and/or ending thereof to the controller 204. The indication may be provided for example by passing a suitable signal to the controller 204 or by writing respective information in a memory to which both the detector 202 and the controller 204 have an access.

The controller 204 is configured to, in response to a period of idle time being detected, cause or control the power supply 208 to temporarily limit the power supplied from the power supply circuit 208 to the load 206 and hence to the capacitive device 210. Limiting the power supplied to the load 206 may comprise the controller issuing a control signal that causes decreasing the power supplied from the power supply circuit 208, e.g. decreasing the absolute value of electric current supplied from the power supply circuit 208 at a desired value for a desired period of time or completely disabling the operation of the power supply circuit 208, e.g. by cutting the absolute value of electric current supplied from the power supply circuit 208 to zero or essentially zero for a desired period of time.

Figure 3 schematically illustrates the control apparatus 200 within a second exemplifying arrangement, wherein the load 206 comprises a bridge circuit 306. The bridge circuit 306 is configured to supply power to a load 312 connected or coupled thereto. Hence, the load 312 may be part of the load 206. In the following, the load 312 may also be referred to as a second load in order to emphasize the difference between the two concepts of load introduced hereinbefore. The load 312 may be connected or coupled to the bridge circuit 306 via an inductor 314. Alternatively, the inductor 314 may be considered as a component of the load 312 or as a component of the bridge circuit 306. The load 312 may be for example a high intensity discharge (HID) lamp, a fluorescent lamp or a light source of other type.

The bridge circuit 306 comprises at least one pair of switches, configured to operate such that the switches of a pair are not in a closed state simultaneously. As a non-limiting example, the bridge circuit 306 may be a full bridge circuit comprising two pairs of switches, as described in more detail hereinbefore e.g. in context of Figure 1b. In case of a full bridge circuit a period of idle time corresponds to a period of time when both switches in both pairs of switches of the full bridge circuit are in open state. As another example, the bridge circuit may be a half bridge circuit comprising a single pair of switches, as described in more detail hereinbefore. In case of a half bridge circuit a period of idle time corresponds to a period of time when both switches of the single pair of switches of the half bridge circuit are in open state. In other words, the bridge circuit 306 may be considered to exhibit a period of idle time when none of the switches of said at least one pair of switches are in closed state.

The switches of a bridge circuit, e.g. the switches S1 and S2 of a half-bridge circuit described in context of Figure 1 a or the switches S1, S2, S3 and S4 of a full bridge circuit described in context of Figure 1b, may be implemented for example as suitable field-effect transistor (FET) or bipolar junction transistors (BJT) as known in the art.

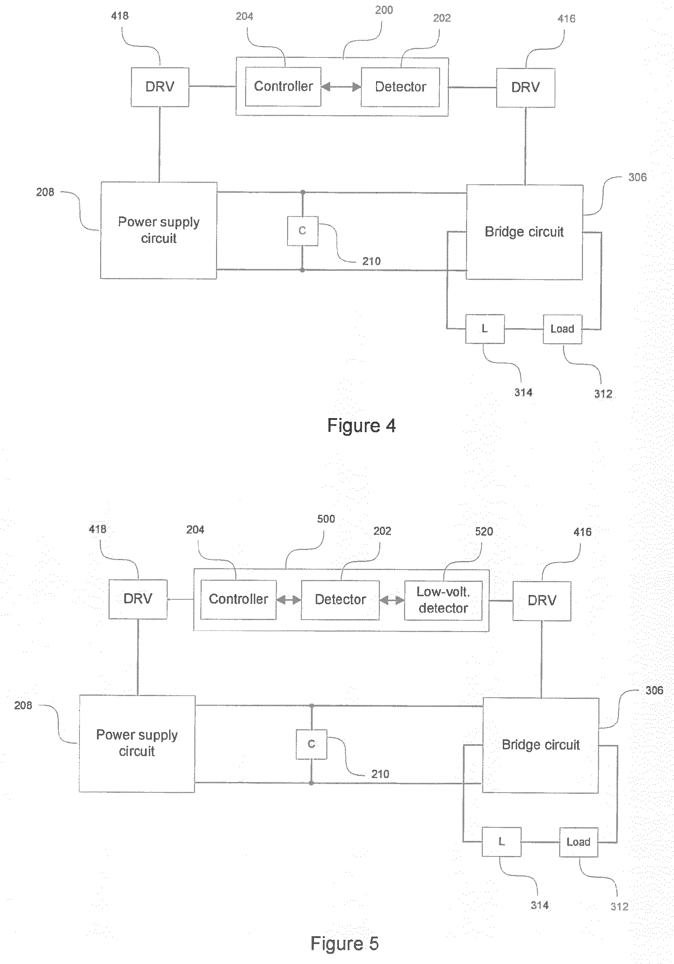

Figure 4 schematically illustrates the control apparatus 200 within a third exemplifying arrangement, wherein the load 206 comprises a bridge circuit 306, and wherein the arrangement further illustrates the driving circuits 416 and 418.

A driving circuit 416 configured to drive the bridge circuit 306 is preferably employed to ensure desired operation of the bridge circuit 306. The driving circuit 416 may be configured to control the at least one pair of switches comprised in the bridge circuit 306. The driving circuit 416 may be configured to provide a control signal or control signals to operate the switch(es) of the bridge circuit 306 in such a way that only one of the switches of a pair of switches is in closed state at any given time. Moreover, the driving circuit 416 may be configured to operate the switch(es) of the bridge circuit 306 such that a predetermined idle time is introduced. The driving circuit 416 may be coupled or connected to the bridge circuit 306, or the driving circuit 416 may be, alternatively, considered as part of the bridge circuit 306.

The driving circuit 416 may comprise for example an integrated circuit (IC), a processor and/or a circuitry comprising discrete components. In case the driving circuit 416 comprises a processor, one or more computer program instructions may be embodied on a memory included in the processor or in a separate memory to which the processor has access, the one or more computer program instructions configured to cause the processor to drive the switches of a pair of switches and/or components of the driving circuit 416 to cause operating the switches of the bridge circuit 306 in a manner described hereinbefore. Circuits, ICs and/or processors for controlling the switches of one or more pairs of switches in such a manner are known in art.

The power supply circuit 208 may also comprise one or more switches configured to control the operation of the power supply circuit 208 in order to supply a desired power level to the load 206, e.g. to the bridge circuit 306. The one or more switches of the power supply circuit 208 may be implemented for example as suitable field-effect transistor (FET) or bipolar junction transistors (BJT) as known in the art. A driving circuit 418 configured to drive the power supply circuit 208 is preferably employed to ensure desired operation of the power supply circuit 208. The driving circuit 418 may be configured to control the one or more switches comprised in the power supply circuit 208. The driving circuit 418 may be configured to provide a drive signal or drive signals to operate the one or more switches of the power supply circuit 208 at a desired rate and/or according to a desired switching pattern. The driving circuit 418 may be coupled or connected to the power supply circuit 208, or the driving circuit 418 may be, alternatively, considered as part of the power supply circuit 208.

The considerations with respect to the structure of a driving circuit 416 configured to control the switches of the bridge circuit 206 apply also to a driving circuit 418 configured to control the operation of the power supply circuit 208.

The driving circuit 416 configured to drive the at least one pair of switches of the bridge circuit 306 and the driving circuit 418 configured to drive the one or more switches of the power supply circuit 208 may be provided as separate circuits or circuitries. Alternatively, a joint driving circuit configured to control operation of the at least one pair of switches of the bridge circuit 306 and the one or more switches of the power supply circuit 208 may be provided. The considerations with respect to the operation and structure of driving circuits 416 and 418 apply also to a joint driving circuit.

As described hereinbefore, the load 206 may exhibit a period of idle time at regular intervals. Moreover, each occurrence of a period of idle time may have a similar or essential similar duration. As an example of such a period of idle time having essentially fixed duration and which is taking place at essentially regular intervals, a switching cycle of the at least one pair of switches of the bridge circuit 306 is described in the following by an example with a reference to the full bridge circuit of Figure 1 b. A switching cycle may be considered to comprise a period *T₁* during which the switches S1 and S4 are in closed state and the switches S2 and S3 are in open state, followed by a period of first idle time *Tᵢ₁* during which none of the switches S1, S2, S3 and S4 is in closed state, followed by a period *T₂* during which the switches S2 and S3 are in closed state and the switches S1 and S4 are in open state, further followed by a second period of idle time *Tᵢ₂*. After the second period of idle time *Tᵢ₂* the next switching cycle starts again with a period *T₁* during which the switches S1 and S4 are in closed state and the switches S2 and S3 are in open state. Hence, in this exemplifying case a switching period may be considered to comprise the time period from the moment of setting the switches S1 and S4 from the open state into the closed state until the moment just before the next time of setting the switches S1 and S4 from the open state to the closed state. Consequently, the duration of a switching period is *T_{S}* = *T₁*+*Tᵢ₁*+*T₂*+*Tᵢ₂,* implying a switching frequency of *f_{S}*= 1/*T*_{*s*.} in the bridge circuit 306.

Similarly, the concept of switching cycle may be applied also the one or more switches of the power supply circuit 208, a switching period covering the period of time setting a switch of the power supply circuit 208 from open state to the closed state until the moment just before setting the same switch from open state to the closed state again.

Referring back to the exemplifying arrangements of Figures 2 and 3, the at least one pair of switches comprised in the bridge circuit 306 and the one or more switches comprised in the power supply circuit 208 are typically driven at different rates. In particular, the one or more switches of the power supply circuit 208 may be switched at a switching frequency that is higher than the switching frequency applied to the at least one pair of switches of the bridge circuit 306. Consequently, a number of switching cycles of the power supply circuit 208 typically take place during a single switching cycle of the bridge circuit 306. As an example, the power supply circuit 208 may be configured to have a switching frequency in the range from 35 to 85 kHz whereas the bridge circuit 306 may be configured to apply a switching frequency in the range from 150 to 300 Hz.

Due to switching behavior of the power supply circuit 208 the power supplied therefrom may not be exactly constant over a short period of time. In particular, the power supplied from the power supply circuit 208 may exhibit variations over a switching cycle. On the other hand, the averaged power, e.g. an rms power, over a number of switching cycles typically remains constant or essentially constant in case the operating parameters of the power supply circuit 208 remain unchanged. The controller 204 is preferably configured to, in response to a period of idle time being detected, cause or control the power supply 208 to limit the power supplied therefrom for a duration covering one or more switching cycles of the power supply circuit 208.

The detector 202 may be configured to detect a period of idle time of the load 206 by monitoring the voltage across the load 206 and electric current flowing through the load 206, thereby enabling determination of the power consumed by the load 206 as a product of the observed voltage and the observed electric current. However, while such an arrangement may be suitable for a number of applications, in certain applications this could result in unfeasibly low reaction time, thereby making it a challenge to enable the controller 204 to temporarily limit the power supplied from the power supply circuit 208 in a manner that e.g. the effect of a current spike that may occur at the load 206 immediately after a period of idle time could be mitigated or avoided.

Hence, alternatively or additionally, the detector 202 may be configured to detect a period of idle time on basis of a control signal issued at the load 206. In particular, the detector 202 may be configured to detect a period of idle time on basis of a control signal configured to control the state of a switch of the load 206, for example the state of a switch of the at least one pair of switches of the bridge circuit 306.

The control signal used as a basis for detecting a period of idle time may be for example a control signal issued by the driving circuit 416 configured to drive a switch of the at least one pair of switches of the bridge circuit 306. Alternatively or additionally, the control signal used as a basis for detecting a period of idle time may be for example a control signal issued to the driving circuit 416, which control signal is configured to cause the driving circuit 416 to issue a driving signal in order to drive a switch of the at least one pair of switches of the bridge circuit 306. As a further example, the control signal used as a basis for detecting a period of idle time may be an internal signal of the driving circuit 416. Especially in the latter two examples it may be possible to detect a period of idle time in advance, thereby enabling improved reaction time for the controller 204 to temporarily limit the power supplied from the power supply circuit 208 to the load 206.

In particular, the detector 202 may be configured, for example, to monitor control signals configured to control the states of the two switches of a pair of switches of the bridge circuit 306, for example the switches S1 and S2 of a full bridge circuit or a half bridge circuit. Consequently, the detector 202 may be configured to detect a start of a period of idle time in response to detecting the control signals to exhibit characteristics that will cause the switches S1 and S2 to be set in open state. Similarly, the detector 202 may be configured to detect an end of the period of idle time in response to detecting the control signals to exhibit characteristics that will cause either one of the switches S1 and S2 to be set in closed state. As another example, additionally or alternatively, similar detection may be applied to the switches S3 and S4 of a full bridge circuit.

As a further example, in case of a full bridge circuit the detector 202 may be configured to monitor a first control signal configured to control the state of a switch of a first pair of switches of the full bridge circuit and to monitor a second control signal configured to control the state of a switch of a second pair of switches of the full bridge circuit. The monitored switches may be for example S1 and S3 or S2 and S4. Assuming monitoring of control signals configured to control the states of the switches S2 and S4, the detector 202 may be configured to detect a start of a period of idle time in response to detecting the first and second control signals to exhibit characteristics that will cause the switches S2 and S4 to be set in open state. Similarly, the detector 202 may be configured to detect an end of the period of idle time in response to detecting the first and second control signals to exhibit characteristics that will cause either one of the switches S2 and S4 to be set in closed state.

The detector 202 may be configured to detect a control signal exhibiting certain characteristics e.g. on basis of a control signal exhibiting a predetermined voltage and/or a predetermined electric current. Criteria for detection may comprise for example detecting a control signal exhibiting a voltage exceeding (or falling below) a predetermined level and/or an electric current exceeding (or falling below) a predetermined threshold value.

In case the driving circuit 416 or a portion thereof as well as the detector 202 or a portion thereof are implemented using a processor and a computer program comprising one or more computer program instructions - as described hereinbefore - the detection may comprise computer program instructions configured to detect conditions that will result in issuance of a control signal to a respective switch of the bridge circuit 306, for example along the lines described hereinbefore.

The detector 202 may be configured to detect both a start of a period of idle time and an end of the period of idle time. Consequently, as an example, the controller 204 may be configured to limit the power supplied from the power supply circuit 208 to the load 206 for the duration of the period determined by the start and end of a period of idle time. As another example, the controller 204 may be configured to initiate temporary limitation of the power supplied from the power supply circuit 208 to the load 206 immediately after receiving an indication of a start of a period of idle time and to continue the limitation of power supplied to the load 206 for a predetermined period of time, which predetermined period of time is, however, terminated in response to receiving an indication on the end of the period of idle time. As a variation of the previous examples, the controller 204 may be configured to initiate the limitation of the power supplied to the load 206 after a predetermined temporal margin after having received an indication of a start of a period of idle time.

Alternatively, the detector 202 may be configured to detect only a start of a period of idle time. Consequently, the controller 204 may be e.g. configured to, in response to a beginning of a period of idle time being detected, initiate limitation of the power supplied from the power supply circuit 208 to the load 206 for a predetermined period of time. As a variation of the previous example, the controller 204 may be configured to initiate the limitation of the power supplied to the load 206 after a predetermined temporal margin after having received an indication of a start of a period of idle time.

The controller 204 may be configured to control the power supply circuit to temporarily limit the power supplied from the power supply circuit 208 by disabling the operation of the driving circuit 418 configured to drive the power supply circuit 208. The disabling may involve completely disabling, preventing or modifying the operation of the driving circuit 418 or disabling, preventing or modifying a part or parts of the operation of the driving circuit 418. The disabling may comprise for example preventing the driving circuit 418 from issuing a drive signal the power supply circuit 208 requires for normal operation, thereby resulting in temporary decrease in the output power supplied by the power supply circuit 208.

In case the driving circuit 418 comprises an IC and/or a processor, the driving circuit 418 may be equipped with an enable/disable pin or a corresponding input line that may be used as an on/off switch in view of the operation of the driving circuit 418 - and hence as an on/off switch of the power supply circuit 208. An enable/disable pin may be configured to operate for example in such a way that the driving circuit 418 operates normally in response to a voltage exceeding a predetermined threshold (or falling below a predetermined threshold) being issued at the enable/disable pin, whereas a voltage falling below another predetermined threshold (or exceeding another predetermined threshold) results in disabling the operation of the driving circuit 418, and hence the operation of the power supply 208. Consequently, the controller 204 may be configured to cause provision of a voltage resulting in temporarily disabling the operation of the driving circuit 418 in an enable/disable pin in response to a period of idle time being detected, thereby completely preventing the power supply circuit 208 from supplying power for the corresponding period of time.

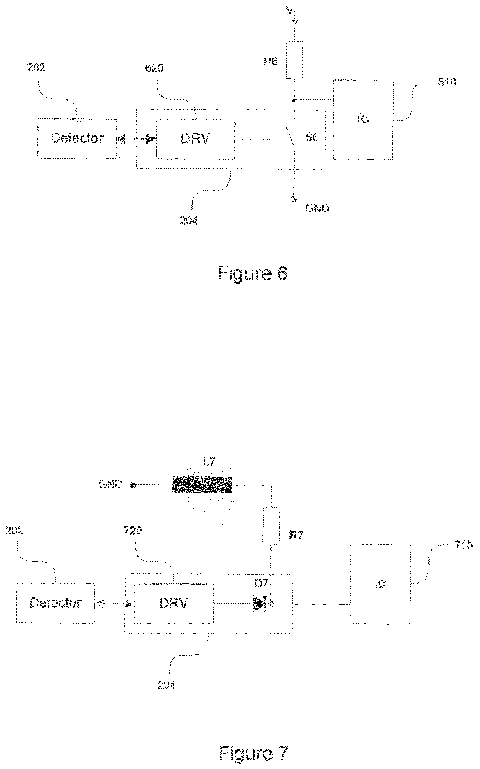

Figure 6 schematically illustrates an example of an arrangement for the controller 204 controlling the power supply circuit to temporarily limit the power supplied from the power supply circuit 208 by disabling the operation of the driving circuit 418 configured to drive the power supply circuit 208. In this example the controller 204 comprises a driving circuit 620 and a switch S6, while a resistor R6 and an IC 610 are part of the driving circuit 418. The driving circuit 620 is coupled to control the switch S6 in accordance with indication of a period of idle time from the detector 202. In particular, the driving circuit 620 is configured to provide a low potential, e.g. at zero or essentially zero volts, at its output during normal operation of the load 206, thereby causing the switch S6 to remain in open state, resulting in provision of the voltage provided at V_{c} via a resistor R6 to an enable/disable pin of an IC 610 hence keeping the IC 610 controlling the driving circuit 418 in an enabled state. On the other hand, in response to an idle time being detected the driving circuit 620 is configured to provide a high potential, e.g. a voltage exceeding a predetermined threshold, at its output to cause setting the switch S6 into closed state. Consequently, the potential at the V_{c} is coupled to the ground potential via the resistor R6, resulting in temporarily disabling the operation of the IC 610 due to insufficient voltage being provided in the enable/disable pin of the IC 610. The driving circuit 620 may be configured to provide the high potential for example by coupling the output thereof to a suitable operating voltage or to a charge storage such as a capacitor.

The 'high' and/or 'low' potentials to be provided as the output of the driving circuit 620 typically depends on a type of a switch employed as the switch S6. As an example, in case the switch S6 is implemented as a bipolar junction transistor (BJT), a voltage exceeding a threshold voltage, e.g. 0.7 volts, may be considered as a high potential, whereas a voltage not exceeding the threshold voltage may be considered as a low potential. As another example, if a field-effect transistor (FET) is employed as the switch S6, a threshold of considering a voltage as a high voltage may be e.g. in the range 5 to 12 volts, whereas a voltage not exceeding the threshold may be regarded as a low potential.

The controller 204 may be configured to control the power supply circuit 208 to temporarily limit the power supplied from the power supply circuit 208 by disabling or preventing the provision of a drive signal configured to control a state of a switch of the power supply circuit 208. As an example, in case the power supply circuit 208 comprises a buck converter, as schematically illustrated by an example in Figure 1c, this may comprise disabling or preventing the provision of a drive signal configured to set the switch S in closed state during the detected period of idle time, thereby resulting in temporarily disabling the operation of the power supply circuit 208 and, consequently, temporary decrease of the output power supplied by the power supply circuit 208 for the respective period of time.

The controller 204 may be configured to control the power supply circuit 208 to temporarily limit the power supplied from the power supply circuit 208 by modifying a signal used as a basis for supplying a drive signal configured to control the state of a switch of the power supply 208 from the driving circuit 418. The modification may comprise modifying a signal provided as input to the driving circuit 418 and/or modifying a signal or interpretation thereof within the driving circuit 418.

The driving circuit 418 may be configured to receive a signal indicating that an electric current at the output of the power supply circuit 208 is zero or its absolute value is essentially zero. Alternatively or additionally, the driving circuit 418 may be configured to receive an indication of the level of electric current at the output of the power supply circuit 208 and, consequently, determine a signal indicating that an electric current at the output of the power supply circuit 208 is zero or its absolute value is essentially zero. The driving circuit 418 may be further configured to provide a drive signal for setting a switch of the power supply circuit 208, e.g. the switch S of a buck converter circuit, in closed state in response to said signal indicating a zero current.

The controller 204 may be configured to control the power supply circuit 208 to temporarily limit the power supplied from the power supply circuit 208 by modifying the signal indicating a zero current at the output of the power supply 208 in response to a detected period of idle time. The modification may comprise for example replacing the signal indicating a zero current with a signal indicating a non-zero current, thereby temporarily preventing setting the switch of the power supply circuit 208 in closed state. As another example, the modification may comprise modifying the indication of the level of electric current at the output of the power supply circuit 208 to indicate a non-zero electric current instead of the zero current actually observed/measured.

In case the driving circuit 418 comprises an IC and/or a processor, the driving circuit 418 may be equipped with a zero current indication pin or a corresponding input line that may be used to receive the signal indicating zero current at the IC and/or the processor and to employ the received signal as a signal triggering the IC and/or the processor to issue a drive signal configured to set a switch of the power supply circuit 208, e.g. the switch S of a buck converter circuit, in closed state. Thus, in case the controller 204 modifies the signal indicating a zero current at the output of the power supply circuit 208, the driving circuit 418 is effectively prevented from issuing the drive signal configured to set the switch of the power supply circuit 208 in closed state, thereby resulting in temporary limitation of the power supplied from the power supply circuit 208.

Alternatively, the IC and/or the processor may be equipped with a pin or a corresponding input line that may be used to receive the indication of the level of electric current at the output of the power supply circuit 208. Consequently, the IC and/or the processor may be configured to issue a drive signal configured to set a switch of the power supply circuit 208 in open state in response to the indicated level of electric current being zero or essentially zero. Hence, the driving circuit 418 is effectively prevented from issuing the drive signal configured to set the switch of the power supply circuit 208 in closed state, thereby resulting in temporary limitation of the power supplied from the power supply circuit 208.

Figure 7 schematically illustrates an example of the controller 204 causing the power supply circuit 208 to temporarily limit the power supplied from the power supply circuit 208 by modifying a signal that is used to indicate to an IC 710 a zero-current at the output of the power supply circuit 208. In this example the controller 204 comprises a driving circuit 720 and a diode D7, whereas an inductor L7, a resistor R7 and an IC 710 are part of the driving circuit 418. The inductor L7 is mutually coupled with another inductor (not shown) connected or coupled to the output of the power converter circuit 208. Hence, while (non-zero) electric current provided at the output of the power converter circuit 208 flows via the another inductor, the voltage induced in the inductor L7 results in a sufficient voltage being provided at a zero current indication pin of the IC 710 to indicate a non-zero current, thereby keeping the driving circuit 418 from providing a drive signal for setting a switch of the power supply circuit 208, e.g. the switch S of a buck converter circuit, in closed state. In contrast, while the electric current at the output of the power converter circuit 208 is zero or essentially zero, the voltage induced in the inductor L7 drops to zero or essentially zero, hence failing provide a sufficient voltage to the zero current indication pin of the IC 710 and thereby causing the driving circuit 418 to provide a drive signal for setting a switch of the power supply circuit 208, e.g. the switch S of a buck converter circuit, in closed state.

During normal operation of the load 206 the driving circuit 720 is configured to provide a low potential, e.g. at zero or essentially zero volts, at its output in order not to interfere with the zero current detection in the driving circuit 418. However, in response to an idle time being detected the driving circuit 720 is configured to provide a high potential, e.g. a voltage exceeding a predetermined threshold, at its output. This provides a sufficient voltage at the zero current indication pin of the IC 710 in order to indicate a non-zero current regardless of the current provided at the output of the power supply circuit 208, thereby resulting in temporary limitation of the power supplied by the power supply circuit 208. The driving circuit 720 may be configured to provide the high potential for example by coupling the output thereof to a suitable operating voltage or to a charge storage such as a capacitor, as discussed hereinbefore in context of Figure 6.

The discussion with respect to the 'high' and/or 'low' potentials and types of switches provided hereinbefore in context of the driving circuit 620 and the switch S6 apply also to the driving circuit 720 and the switch S7.

The driving circuit 418 may be configured to receive a signal indicating that a predetermined (maximum) electric current at the output of the power supply circuit 208 has been reached. Alternatively or additionally, the driving circuit 418 may be configured to receive an indication of the level of electric current at the output of the power supply circuit 208 and, consequently, determine a signal indicating that a predetermined (maximum) electric current at the output of the power supply circuit 208 has been reached. The driving circuit 418 may be further configured to provide a drive signal for setting a switch of the power supply circuit 208, e.g. the switch S of a buck converter circuit, in open state in response to said signal indicating the predetermined electric current at the output of the power supply circuit 208.

The controller 204 may be configured to control the power supply circuit 208 to temporarily limit the power supplied from the power supply circuit 208 by modifying the signal indicating the predetermined electric current at the output of the power supply circuit 208 in response to a detected period of idle time. In particular, the modification may comprise for example issuing the signal indicating that the predetermined electric current has been reached already in response to a second predetermined electric current at the output of the power supply circuit 208 having been reached, wherein the second predetermined electric current is lower than the (first) predetermined electric current, thereby resulting in temporarily reduced power supplied from the power supply circuit 208. As another example, the modification may comprise issuing the signal indicating that the predetermined electric current has been reached regardless of the actually observed/measured current. As a further example, the modification may comprise modifying the indication of the level of electric current at the output of the power supply circuit 208 to indicate electric current higher than the actually observed/measured current.

In case the driving circuit 418 comprises an IC and/or a processor, the driving circuit 418 may be equipped with a pin or a corresponding input line that may be used to receive the signal indicating that the predetermined (maximum) electric current at the output of the power supply circuit 208 has been reached. The IC and/or the processor may be configured to employ the received signal as a signal triggering the IC and/or the processor to issue a drive signal configured to set a switch of the power supply circuit 208, e.g. the switch S of a buck converter circuit, in open state. Hence, in case the controller 204 modifies the signal indicating the predetermined electric current at the output of the power supply circuit 208, the driving circuit 418 is effectively prevented from reaching the predetermined maximum power, consequently resulting in temporarily reduced power at the output of the power supply circuit 208.

Alternatively, the IC and/or the processor may be equipped with a pin or a corresponding input line that may be used to receive the indication of the level of electric current at the output of the power supply circuit 208 and with a pin or a corresponding input line that may be used to receive the indication of the predetermined (maximum) electric current at the output of the power supply circuit 208. Consequently, the IC and/or the processor may be configured to compare the indicated level of electric current to the predetermined maximum electric current and to issue a drive signal configured to set a switch of the power supply circuit 208 in open state in response to the indicated level of electric current exceeding the predetermined maximum electric current. Hence, in case the controller 204 modifies the indication of the level of electric current at the output of the power supply circuit 208 to indicate electric current higher than the actually observed/measured current, the driving circuit 418 is effectively prevented from reaching the predetermined maximum power, consequently resulting in temporarily reduced power at the output of the power supply circuit 208.

The driving circuit 418 may be configured to receive a signal indicating a voltage across the load 206 and the electric current in the load 206, thereby enabling determination of the power consumed by the load 206. The driving circuit 418 may be further configured to receive a signal indicating a reference voltage and a signal indicating a reference electric current, thereby enabling determination of the reference power. The driving circuit 418 may be configured to compare the power consumed by the load 206 to the reference power, and to decrease the output power of the power supply circuit 208 in response to the power consumed by the load 206 exceeding the reference power and to increase the output power of the power supply circuit 208 in response to the power consumed by the load 206 falling below the reference power. This process may be referred to as (power) compensation of the driving circuit 418.

As an example, the driving circuit 418 may be configured to change the switching cycle of the power supply circuit 208 by shortening the period(s) of time during which the switch of the power supply circuit 208, e.g. the switch S of a buck converter circuit, is in closed state in response to the power consumed by the load 206 exceeding the reference power. As another example, the driving circuit 418 may be configured to change the switching cycle of the power supply circuit 208 by lengthening the period(s) of time during which the switch of the power supply circuit is in closed state in response to the power consumed by the load 206 falling below the reference power.

The controller 204 may be configured to modify the signal indicating a voltage across the load 206 and/or the electric current in the load 206 to indicate a voltage and/or electric current higher than the one actually observed/measured, respectively, in response to a period of idle time being detected. In other words, the controller 204 may be configured to modify a signal indicative of the observed power consumed by the load 206. Consequently, the driving circuit 418 considers the power consumed by the load 206 to be higher than it actually is, thereby resulting in temporarily reduced power at the output of the power supply circuit 208.

Alternatively, the controller 204 may be configured to modify the signal indicating the reference voltage and/or the reference electric current to indicate a voltage and/or electric current lower than the one provided during normal operation of the load 206, respectively, in response to a period of idle time being detected. In other words, the controller 204 may be configured to modify a signal indicative of the reference power of the power supply circuit 208, and thereby indirectly modifying the interpretation of the observed power consumed by the load 206 in the driving circuit 418. Consequently, the driving circuit 418 considers the reference power to be lower than it actually is for the purposes of the normal operation of the power supply circuit 208, thereby resulting in temporarily reduced power at the output of the power supply circuit 208.

As a further alternative, the controller 204 may be configured to modify the (power) compensation process within the driving circuit 418 in response to a period of idle time being detected. The modification may comprise for example issuing or modifying a signal within the driving circuit 418 causing the driving circuit 418 to decrease of output power of the power supply circuit 208 and/or issuing or modifying a signal within the driving circuit 418 preventing the driving circuit 418 from increasing the output power of the power supply circuit 208 even though the determined power consumed by the load 206 has been detected to fall below the reference power. As a further example, the modification may comprise modifying the switching cycle of the power supply circuit 208 by shortening the period(s) of time during which the switch of the power supply circuit 208, e.g. the switch S of a buck converter circuit, is in closed state and/or lengthening the period(s) of time during which the switch of the power supply circuit 208 is in open state in order to temporarily decrease the power supplied from the power supply circuit 208.

In case the driving circuit 418 comprises an IC and/or a processor, the driving circuit 418 may be equipped with pins or corresponding input lines that may be used to receive the signals indicating the voltage across the load 206, the electric current in the load 206, the reference voltage and the reference electric current. Consequently, the IC and/or the processor may be configured to carry out the (power) compensation process described hereinbefore.

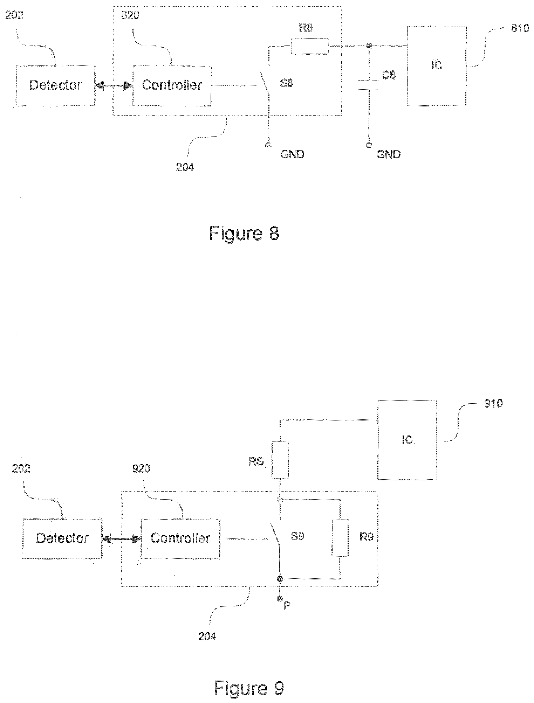

Figure 8 schematically illustrates an example of the controller 204 controlling the power supply circuit 208 to temporarily limit the power supplied from the power supply circuit 208 by modifying a signal indicating a reference voltage or a signal indicating a reference electric current to the driving circuit 418, provided at a suitable input pin of an IC 810. In this example the controller 204 comprises a driving circuit 820, a switch S8 and a resistor R8, whereas a capacitor C8 and the IC 810 are part of the driving circuit 418. During normal operation of the load 206 the driving circuit 820 is configured to provide a low potential, e.g. at zero or essentially zero volts, at its output, hence causing the switch S8 to be kept in open state, resulting in the reference voltage or the reference current to be indicated on basis of the charge arranged in the capacitor C8. Consequently, the (power) compensation process operates normally, as described hereinbefore. In contrast, in response to an idle time being detected the driving circuit 820 is configured to provide a high potential, e.g. a voltage exceeding a predetermined threshold, at its output to cause setting the switch S8 into closed state, hence discharging the capacitor C8 via the resistor R8 and resulting in the reference voltage or the reference current to be indicated to have a zero value or essentially zero value. Consequently, the (power) compensation process is modified to operate on basis of a zero-power target, thereby resulting in temporarily limiting the power supplied from the power supply circuit 208. The driving circuit 820 may be configured to provide the high potential for example by coupling the output thereof to a suitable operating voltage or to a charge storage such as a capacitor, as discussed hereinbefore in context of Figure 6.

The discussion with respect to the 'high' and/or 'low' potentials and types of switches provided hereinbefore in context of the driving circuit 620 and the switch S6 apply also to the driving circuit 820 and the switch S8.

Figure 9 schematically illustrates an example of the controller 204 controlling the power supply circuit 208 to temporarily limit the power supplied from the power supply circuit 208 by modifying a signal indicating the electric current in the load 206 to indicate electric current higher than the one actually observed/measured in order to cause the (power) compensation process to decrease the power supplied from the power supply circuit 208. In this example the controller 204 comprises a driving circuit 920, a switch S9 and a resistor R9, whereas a current sensing resistor RS and an IC 910 are part of the driving circuit 418. During normal operation of the load 206 the driving circuit 920 is configured to provide a high potential, e.g. a voltage exceeding a predetermined threshold, at its output to cause keeping the switch S9 in closed state, consequently causing the current sensing resistor RS to sense the electric current as provided from the load 206 via a point P and via the current sensing resistor RS to an input pin of the IC 910 receiving a signal indicating the electric current in the load 206. In contrast, in response to an idle time being detected the driving circuit 920 is configured to provide a low potential, e.g. at zero or essentially zero volts, at its output to cause setting the switch S9 into open state, consequently connecting the input pin of the IC 910 receiving a signal indicating the electric current in the load 206 to the point P via the current sensing resistor RS and the resistor R9 having a high resistance (compared to that of the current sensing resistor RS), hence causing the current sensing resistor RS to measure electric current higher than provided from the load 206 to the point P. As an example regarding relationship between the resistances of the resistors RS and R9, assuming the RS to have a resistance of R ohms and the R9 to have a resistance of n * R ohms (i.e. assume R9 have a resistance which is n times that of RS), the effect on the sensed at the resistor RS drops with a factor R / (R + n * R) = 1 / (1 + n). Hence, selecting the resistor RS and R9 such that n = 9, the arrangement of Figure 9 reduces the current sensed at the current sensing resistor RS to 1 / (1 + 9) = 1 /10 of the real current at the point P. The value n may be selected e.g. in accordance with characteristics of the IC 910. As non-limiting example, the value of n may be selected to be a value in the range from 10 to 100.

The discussion with respect to the 'high' and/or 'low' potentials and types of switches provided hereinbefore in context of the driving circuit 620 and the switch S6 apply also to the driving circuit 920 and the switch S9.

Figure 5 schematically illustrates a control apparatus 500 in accordance with an embodiment of the invention within a fourth exemplifying arrangement. The control apparatus 500 further comprises a low-voltage detector 520 operatively coupled to the detector 202 and/or to the controller 204. Although the low-voltage detector 520 is illustrated in Figure 5 as a separate element of the apparatus 500, the function(s) and procedure(s) of the low-voltage detector 520 may be provided as part of the detector 202 and/or the controller 204.

The low voltage detector 520 may be connected or coupled to the load 206 and configured to provide a signal indicative of a voltage across the load 206 falling below a predetermined threshold. The controller 204 may be configured to control the power supply circuit 208 to temporarily limit the power supplied from the power supply circuit 208 to the load 206 in response to a period of idle time only in response to the voltage across the load 206 falling below the predetermined threshold.

The predetermined threshold for the voltage across the load 206 may be dependent on the characteristics of the load 206 and/or on the characteristics of the power supply circuit 208. As a non-limiting example, the predetermined threshold may be for example in the range from 40 to 80 V.

The control apparatus 200, 500 may be implemented as dedicated apparatus or the control apparatus 200, 500 may be implemented as a logical entity within another apparatus, for example the driving circuit 416, the driving circuit 418, or a joint driving circuit implementing the functions of the driving circuits 416 and 418.

Moreover, the procedures assigned to the detector 202, to the controller 204 and to the possible low-voltage detector 520 as described hereinbefore may be divided between the units in a different manner, or the control apparatus 200, 500 may comprise further units that may be configured to perform some of the procedures described hereinbefore for the detector 202, the controller 204 and the low-voltage detector 520. On the other hand, the procedures the detector 202, the controller 204 and possibly the low-voltage detector 520 are configured to perform may be assigned to a single processing unit within the control apparatus 200, 400 instead. In particular, the control apparatus 200, 400 for driving an arrangement comprising the power supply circuit 208 configured to supply power to the load 206, which load 206 is connected in parallel with the capacitive device 210 may comprise means for detecting a period of idle time of the load 206, wherein the period of idle time corresponds to a period of time when the load 206 consumes no power, and means for controlling the power supply circuit so as to temporarily limit the power supplied from the power supply circuit 208 to the load 206, configured to limit the power supplied to the load 206 in response to the period of idle time being detected. The control apparatus 400 may further comprise means for providing an indication of a voltage across the load 206 falling below a predetermined threshold, wherein the means for temporarily limiting the power supplied from the power supply circuit 208 is configured to control the power supply circuit so as to temporarily limit the power supplied from the power supply circuit 208 to the load 206 only in response to the voltage across the load 206 falling below the predetermined threshold.

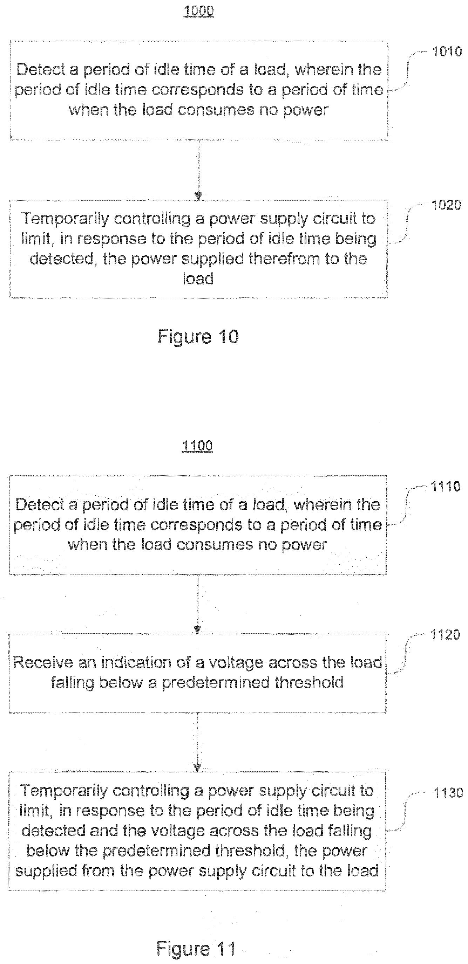

Figure 10 illustrates a method 1000 in accordance with an embodiment of the invention. The method 1000 may be arranged to drive an arrangement comprising a power supply circuit configured to supply power to a load, which load is connected in parallel with a capacitive device. The method 1000 comprises detecting a period of idle time of the load 206, wherein the period of idle time corresponds to a period of time when the load 206 consumes no power, as indicated in step 1010. The method 1000 further comprises temporarily controlling the power supply circuit so as to limit, in response to the period of idle time being detected, the power supplied from the power supply circuit 208 to the load 206, as indicated in step 1020.

Figure 11 illustrates a method 1100 in accordance with an embodiment of the invention. The method 1100 comprises step 1110, which is identical to the step 1010 of the method 1000. The method 1100 further comprises receiving an indication of a voltage across the load 206 falling below a predetermined threshold, as indicated in step 1120. The method 1100 further comprises controlling the power supply circuit so as to temporarily limit, in response to the period of idle time being detected and the voltage across the load 206 falling below the predetermined threshold, the power supplied from the power supply 208 circuit to the load 206, as indicated in step 1120.

The control apparatus 200, 500 may be implemented as hardware alone, for example as an electric circuit, as a programmable or non-programmable processor, as a microcontroller, etc. The control apparatus 200, 500 may have certain aspects implemented as software alone or can be implemented as a combination of hardware and software.

The control apparatus 200, 500 may be implemented using instructions that enable hardware functionality, for example, by using executable computer program instructions in a general-purpose or special-purpose processor that may be stored on a computer readable storage medium to be executed by such a processor. The control apparatus 200, 500 may further comprise a memory as the computer readable storage medium the processor is configured to read from and write to. The memory may store a computer program comprising computer-executable instructions that control the operation of the switch control apparatus 200, 500 when loaded into the processor. The processor is able to load and execute the computer program by reading the computer-executable instructions from memory

While the processor and the memory are hereinbefore referred to as single components, the processor may comprise one or more processors or processing units and the memory may comprise one or more memories or memory units. Consequently, the computer program, comprising one or more sequences of one or more instructions that, when executed by the one or more processors, cause an apparatus to perform steps implementing a method in accordance with an aspect of the invention.

Reference to a processor or a processing unit should not be understood to encompass only programmable processors, but also dedicated circuits such as field-programmable gate arrays (FPGA), application specific circuits (ASIC), signal processors, etc.

## Claims

1. An arrangement comprising
a power supply circuit (208),
a control apparatus (200) for driving the power supply circuit (208),
a load (206), and
a capacitive device (210),
wherein the power supply circuit (208) is configured to supply power to the load (206),
the load (206) is connected in parallel with the capacitive device (210), the capacitive device (210) is configured to act as an energy storage configured to receive and temporarily store energy provided by the power supply circuit (208), and
the load (206) comprises a bridge circuit (306) comprising at least one pair of switches adapted to be switched at a switching cycle, the bridge circuit (306) being configured to supply power to a second load (312),
**characterized in that** the control apparatus (200) comprises
a detector (202) configured to detect a period of idle time of the load (206), wherein the period of idle time corresponds to a period of time during the switching cycle when none of the switches of said at least one pair of switches are in closed state, and
a controller (204) configured to, in response to the period of idle time being detected, control the power supply circuit (208) so as to temporarily limit the power supplied from the power supply circuit (208) to the load (206) and hence to the capacitive device (210).

2. An arrangement according to claim 1, wherein the bridge circuit (306) is a full bridge circuit comprising two pairs of switches.

3. An arrangement according to claim 1, wherein the bridge circuit (306) is a half bridge circuit comprising a single pair of switches.

4. An arrangement according to any of claims 1 to 3, wherein the arrangement further comprises a first driving circuit (416) configured to drive the bridge circuit (306) and wherein the detector (202) is configured to detect the period of idle time on basis of a control signal configured to control the state of a switch of the at least one pair of switches, wherein the control signal is a control signal issued by the first driving circuit (416) configured to drive a switch of the at least one pair of switches; or a control signal issued to the first driving circuit (416), which control signal is configured to cause the first driving circuit (416) to issue a driving signal in order to drive a switch of the at least one pair of switches; or an internal signal of the first driving circuit (416); or a control signal of an integrated circuit configured to drive a switch of the at least one pair of switches

5. An arrangement according to any of claims 1 to 4, wherein the arrangement further comprises a second driving circuit (418) configured to drive the power supply circuit (208) and wherein the controller (204) is configured to control the power supply circuit (208) so as to temporarily limit the power by disabling the operation of the second driving circuit (418).

6. An arrangement according to any of claims 1 to 4, wherein the controller (204) is configured to control the power supply circuit (208) so as to temporarily limit the power by preventing the provision of a drive signal configured to control the state of a switch of the power supply circuit (208).

7. An arrangement according to any of claims 1 to 4, wherein
the arrangement further comprises a second driving circuit (418) configured to drive the power supply circuit (208), whereby the second driving circuit (418) is configured to provide a drive signal to operate one or more switches of the power supply circuit (208), and
wherein the controller (204) is configured to control the power supply circuit (208) so as to temporarily limit the power by modifying a signal used at the second driving circuit (418) as a basis for supplying the drive signal.

8. An arrangement according to claim 7,
wherein the signal used as a basis for supplying the drive signal is a signal indicating a zero current at the output of the power supply circuit (208) and wherein the second driving circuit (418) is configured to provide the drive signal to operate a switch of the one or more switches of the power supply in closed state in response to said signal indicating a zero current, and
wherein said modification comprises setting said signal to indicate a non-zero current in response to the period of idle time being detected.

9. An arrangement according to claim 7,
wherein the signal used as a basis for supplying the drive signal is a signal indicating a predetermined maximum current at the output of the power supply circuit (208) and wherein the second driving circuit (418) is configured to provide the drive signal to operate a switch of the one or more switches of the power supply in open state in response to said signal indicating a predetermined maximum current, and
wherein said modification comprises setting said signal to indicate the predetermined maximum current in response to the period of idle time being detected.

10. An arrangement according to claim 7, wherein the signal used as a basis for supplying the drive signal
is a signal indicative of power consumed by the load (206), and wherein said modification comprises setting said signal to cause indication of a power higher than the observed power in response to the period of idle time being detected.

11. An arrangement according any of claims 1 to 10, further comprising a low-voltage detector (520) configured to provide an indication of a voltage across the load (206) falling below a predetermined threshold, and wherein the controller (204) is configured to control the power supply circuit (208) so as to temporarily limit the power supplied from the power supply circuit (208) to the load (206) only in response to the voltage across the load (206) falling below the predetermined threshold.

12. An arrangement according to any of claims 1 to 11, wherein the bridge circuit (306) is configured to supply power to a high-intensity discharge lamp.

13. A method for driving a power supply circuit (208) configured to supply power to a load (206),
which load (206) is connected in parallel with a capacitive device (210) configured to act as an energy storage configured to receive and temporarily store energy provided by the power supply circuit (208), and
which load (206) comprises a bridge circuit comprising at least one pair of switches adapted to be switched at a switching cycle, the bridge circuit (306) being configured to supply power to a second load (312), the method comprising
detecting a period of idle time of the load (206), wherein the period of idle time corresponds to a period of time during the switching cycle when none of the switches of said at least one pair of switches are in closed state, and
temporarily controlling the power supply circuit (208) so as to limit, in response to the period of idle time being detected, the power supplied from the power supply circuit (208) to the load (206) and hence to the capacitive device (210).

14. A method according to claim 13, further comprising receiving an indication of a voltage across the load (206) falling below a predetermined threshold, wherein controlling the power supply circuit (208) so as to temporarily limit the power supplied from the power supply circuit (208) comprises temporarily controlling the power supply circuit (208) so as to limit the power only in response to the voltage across the load (206) falling below the predetermined threshold.

15. A computer program for driving a power supply circuit (208) configured to supply power to a load (206),
which load (206) is connected in parallel with a capacitive device (210) configured to act as an energy storage configured to receive and temporarily store energy provided by the power supply circuit (208), and
which load (206) comprises a bridge circuit (306) comprising at least one pair of switches adapted to be switched at a switching cycle, the bridge circuit (306) being configured to supply power to a second load (312),
the computer program including one or more sequences of one or more instructions which, when executed by one or more processors, cause an apparatus to at least perform the method according to claim 13.

## Patentansprüche

1. Anordnung, umfassend
eine Stromversorgungsschaltung (208),
eine Steuervorrichtung (200) zum Ansteuern der Stromversorgungsschaltung (208),
eine Last (206), und
eine kapazitive Einrichtung (210),
wobei die Stromversorgungsschaltung (208) konfiguriert ist zum Liefern von Strom an die Last (206),
die Last (206) parallel zu der kapazitiven Einrichtung (210) geschaltet ist,
die kapazitive Einrichtung (210) konfiguriert ist zum Wirken als ein Energiespeicher, der konfiguriert ist zum Empfangen und vorübergehenden Speichern von durch die Stromversorgungsschaltung (208) gelieferter Energie, und
die Last (206) eine Brückenschaltung (306) umfasst, die mindestens ein paar Schalter umfasst, die ausgelegt sind zum Geschaltetwerden mit einem Schaltzyklus, wobei die Brückenschaltung (306) konfiguriert ist zum Liefern von Strom an eine zweite Last (312),
**dadurch gekennzeichnet, dass** die Steuervorrichtung (200) Folgendes umfasst:
einen Detektor (202), der konfiguriert ist zum Detektieren einer Leerlaufzeitperiode der Last (206), wobei die Leerlaufzeitperiode einer Zeitperiode während des Schaltzyklus entspricht, wenn sich keiner der Schalter des mindestens einen Paars von Schaltern in einem geschlossenen Zustand befindet, und
einen Kontroller (204), der konfiguriert ist zum Steuern der Stromversorgungsschaltung (208) als Reaktion auf das Detektieren der Leerlaufzeitperiode, um den von der Stromversorgungsschaltung (208) an die Last (206) und somit an die kapazitive Einrichtung (210) gelieferten Strom vorübergehend zu begrenzen.

2. Anordnung nach Anspruch 1, wobei die Brückenschaltung (306) eine Vollbrückenschaltung ist, die zwei Paare von Schaltern umfasst.

3. Anordnung nach Anspruch 1, wobei die Brückenschaltung (306) eine Halbbrückenschaltung ist, die ein einzelnes Paar von Schaltern umfasst.

4. Anordnung nach einem der Ansprüche 1 bis 3, wobei die Anordnung weiterhin eine erste Ansteuerschaltung (416) umfasst, die konfiguriert ist zum Ansteuern der Brückenschaltung (306), und
wobei der Detektor (202) konfiguriert ist zum Detektieren der Leerlaufzeitperiode auf der Basis eines Steuersignals, das konfiguriert ist zum Steuern des Zustands eines Schalters des mindestens einen Paars von Schaltern, wobei das Steuersignal ein durch die erste Ansteuerschaltung (416) ausgegebenes Steuersignal ist, konfiguriert zum Ansteuern eines Schalters des mindestens einen Paars von Schaltern; oder ein an die erste Ansteuerschaltung (416) ausgegebenes Steuersignal,
wobei das Steuersignal konfiguriert ist zu bewirken, dass die erste Ansteuerschaltung (416) ein Ansteuersignal zum Ansteuern eines Schalters des mindestens einen Paars von Schaltern ausgibt; oder ein internes Signal der ersten Ansteuerschaltung (416); oder ein Steuersignal einer integrierten Schaltung, konfiguriert zum Ansteuern eines Schalters des mindestens einen Paars von Schaltern.

5. Anordnung nach einem der Ansprüche 1 bis 4, wobei die Anordnung weiterhin eine zweite Ansteuerschaltung (418) umfasst, die konfiguriert ist zum Ansteuern der Stromversorgungsschaltung (208), und wobei der Kontroller (204) konfiguriert ist zum Steuern der Stromversorgungsschaltung (208), um den Strom durch Deaktivieren des Betriebs der zweiten Ansteuerschaltung (418) vorübergehend zu begrenzen.

6. Anordnung nach einem der Ansprüche 1 bis 4, wobei der Kontroller (204) konfiguriert ist zum Ansteuern der Stromversorgungsschaltung (208), um den Strom vorübergehend zu begrenzen durch Verhindern der Lieferung eines Ansteuersignals, das konfiguriert ist zum Steuern des Zustands eines Schalters der Stromversorgungsschaltung (208).

7. Anordnung nach einem der Ansprüche 1 bis 4, wobei die Anordnung weiterhin eine zweite Ansteuerschaltung (418) umfasst, die konfiguriert ist zum Ansteuern der Stromversorgungsschaltung (208), wodurch die zweite Ansteuerschaltung (418) konfiguriert ist zum Liefern eines Ansteuersignals zum Betätigen eines oder mehrerer Schalter der Stromversorgungsschaltung (208), und
wobei der Kontroller (204) konfiguriert ist zum Steuern der Stromversorgungsschaltung (208), um den Strom vorübergehend zu begrenzen durch Modifizieren eines an der zweiten Ansteuerschaltung (418) verwendeten Signals als eine Basis zum Liefern des Ansteuersignals.

8. Anordnung nach Anspruch 7,
wobei das als eine Basis zum Liefern des Ansteuersignals verwendete Signal ein Signal ist, das einen Nullstrom am Ausgang der Stromversorgungsschaltung (208) anzeigt, und wobei die zweite Ansteuerschaltung (418) konfiguriert ist zum Liefern des Ansteuersignals zum Betätigen eines Schalters des einen oder der mehreren Schalter der Stromversorgung in einem geschlossenen Zustand als Reaktion auf das einen Nullstrom anzeigende Signal, und
wobei die Modifikation das Einstellen des Signals zum Anzeigen eines von Null verschiedenen Stroms als Reaktion auf das Detektieren der Leerlaufzeitperiode umfasst.

9. Anordnung nach Anspruch 7,
wobei das als eine Basis zum Liefern des Ansteuersignals verwendete Signal ein Signal ist, das einen vorbestimmten Maximalstrom am Ausgang der Stromversorgungsschaltung (208) anzeigt, wobei die zweite Ansteuerschaltung (418) konfiguriert ist zum Liefern des Ansteuersignals zum Betätigen eines Schalters des einen oder der mehreren Schalter der Stromversorgung in einem offenen Zustand als Reaktion auf das einen vorbestimmten Maximalstrom anzeigende Signal, und
wobei die Modifikation das Einstellen des Signals zum Anzeigen des vorbestimmten Maximalstroms als Reaktion auf das Detektieren der Leerlaufzeitperiode umfasst.

10. Anordnung nach Anspruch 7, wobei das als eine Basis zum Liefern des Ansteuersignals verwendete Signal ein die durch die Last (206) verbrauchte Leistung anzeigendes Signal ist und wobei die Modifikation das Einstellen des Signals umfasst, um eine Anzeige einer über der beobachteten Leistung liegenden Leistung zu bewirken, als Reaktion auf das Detektieren der Leerlaufzeitperiode.

11. Anordnung nach einem der Ansprüche 1 bis 10, weiterhin umfassend einen Niederspannungsdetektor (520), der konfiguriert ist zum Liefern einer Anzeige einer Spannung an der Last (206), die unter einen vorbestimmten Schwellwert fällt, und
wobei der Kontroller (204) konfiguriert ist zum Steuern der Stromversorgungsschaltung (208), um die von der Stromversorgungsschaltung (208) an die Last (206) gelieferte Leistung nur als Reaktion darauf vorübergehend zu begrenzen, dass die Spannung an der Last (206) unter den vorbestimmten Schwellwert abfällt.

12. Anordnung nach einem der Ansprüche 1 bis 11, wobei die Brückenschaltung (306) konfiguriert ist zum Liefern von Strom an eine Hochdruckentladungslampe.

13. Verfahren zum Ansteuern einer Stromversorgungsschaltung (208), die konfiguriert ist zum Liefern von Strom an eine Last (206),
wobei die Last (206) parallel zu einer kapazitiven Einrichtung (210) geschaltet ist, die konfiguriert ist zum Wirken als ein Energiespeicher, der konfiguriert ist zum Empfangen und vorübergehenden Speichern von durch die Stromversorgungsschaltung (208) gelieferter Energie, und
wobei die Last (206) eine Brückenschaltung umfasst, die mindestens ein Paar von Schaltern umfasst, die ausgelegt sind zum Geschaltetwerden mit einem Schaltzyklus, wobei die Brückenschaltung (306) konfiguriert ist zum Liefern von Strom an eine zweite Last (312), wobei das Verfahren Folgendes umfasst:
Detektieren einer Leerlaufzeitperiode der Last (206), wobei die Leerlaufzeitperiode einer Zeitperiode während des Schaltzyklus entspricht, wenn sich keiner der Schalter des mindestens einen Paars von Schaltern in einem geschlossenen Zustand befindet, und
vorübergehendes Steuern der Stromversorgungsschaltung (208), um als Reaktion auf das Detektieren der Leerlaufzeitperiode den von der Stromversorgungsschaltung (208) an die Last (206) und somit an die kapazitive Einrichtung (210) gelieferten Strom zu begrenzen.

14. Verfahren nach Anspruch 13, weiterhin umfassend das Empfangen einer Anzeige einer unter einen vorbestimmten Schwellwert abfallenden Spannung an der Last (206), wobei das Steuern der Stromversorgungsschaltung (208) zum vorübergehenden Begrenzen des von der Stromversorgungsschaltung (208) gelieferten Stroms das vorübergehende Steuern der Stromversorgungsschaltung (208) umfasst, um den Strom nur als Reaktion darauf zu begrenzen, dass die Spannung an der Last (206) unter den vorbestimmten Schwellwert abfällt.

15. Computerprogramm zum Ansteuern einer Stromversorgungsschaltung (208), die konfiguriert ist zum Liefern von Strom an eine Last (206),
wobei die Last (206) parallel zu einer kapazitiven Einrichtung (210) geschaltet ist, die konfiguriert ist zum Wirken als Energiespeicher, der konfiguriert ist zum Empfangen und vorübergehenden Speichern von durch die Stromversorgungsschaltung (208) gelieferter Energie, und
wobei die Last (206) eine Brückenschaltung (306) umfasst, die mindestens ein Paar von Schaltern umfasst, die ausgelegt sind zum Geschaltetwerden mit einem Schaltzyklus, wobei die Brückenschaltung (306) konfiguriert ist zum Liefern von Strom an eine zweite Last (312),
wobei das Computerprogramm eine oder mehrere Sequenzen aus einer oder mehreren Anweisungen enthält, die beim Ausführen durch einen oder mehrere Prozessoren bewirken, dass eine Vorrichtung mindestens das Verfahren nach Anspruch 13 ausführt.

## Revendications

1. Agencement comprenant
un circuit d'alimentation (208),
un appareil de commande (200) pour actionner le circuit d'alimentation (208),
une charge (206) et
un dispositif capacitif (210),
dans lequel le circuit d'alimentation (208) est configuré pour alimenter la charge (206),
la charge (206) est connectée en parallèle avec le dispositif capacitif (210),
le dispositif capacitif (210) est configuré pour agir comme unité de stockage d'énergie configurée pour recevoir et stocker temporairement de l'énergie fournie par le circuit d'alimentation (208), et
la charge (206) comprend un circuit en pont (306) comprenant au moins une paire de commutateurs destinés à être commutés selon un cycle de commutation, le circuit en pont (306) étant configuré pour alimenter une seconde charge (312),
**caractérisé en ce que** l'appareil de commande (200) comprend
un détecteur (202) configuré pour détecter une période de temps d'inactivité de la charge (206), dans lequel la période de temps d'inactivité correspond à une période de temps pendant le cycle de commutation lorsque aucun des commutateurs desdites une ou plusieurs paires de commutateurs ne se trouve en état de fermeture, et
un dispositif de contrôle (204) configuré pour commander le circuit d'alimentation (208), en réponse à la détection de la période de temps d'inactivité, de façon à limiter temporairement la puissance fournie par le circuit d'alimentation (208) à la charge (206) et donc au dispositif capacitif (210).

2. Agencement selon la revendication 1, dans lequel le circuit en pont (306) est un circuit en pont complet comprenant deux paires de commutateurs.

3. Agencement selon la revendication 1, dans lequel le circuit en pont (306) est un circuit en demi-pont comprenant une seule paire de commutateurs.

4. Agencement selon l'une quelconque des revendications 1 à 3, dans lequel l'agencement comprend en outre un premier circuit de commande (416) configuré pour actionner le circuit en pont (306) et dans lequel le détecteur (202) est configuré pour détecter la période de temps d'inactivité sur la base d'un signal de commande configuré pour commander l'état d'un commutateur de la paire ou des paires de commutateurs, dans lequel le signal de commande est un signal de commande délivré par le premier circuit de commande (416) configuré pour commander un commutateur de la paire ou des paires de commutateurs ; ou un signal de commande délivré au premier circuit de commande (416), lequel signal de commande est configuré pour amener le premier circuit de commande (416) à délivrer un signal de commande afin de commander un commutateur de la paire ou des paires de commutateurs ; ou un signal interne du premier circuit de commande (416) ; ou un signal de commande d'un circuit intégré configuré pour commander un commutateur de la paire ou des paires de commutateurs.

5. Agencement selon l'une quelconque des revendications 1 à 4, dans lequel l'agencement comprend en outre un second circuit de commande (418) configuré pour actionner le circuit d'alimentation (208) et dans lequel le dispositif de contrôle (204) est configuré pour commander le circuit d'alimentation (208) de façon à limiter temporairement la puissance en désactivant le fonctionnement du second circuit de commande (418).

6. Agencement selon l'une quelconque des revendications 1 à 4, dans lequel le dispositif de contrôle (204) est configuré pour commander le circuit d'alimentation (208) de façon à limiter temporairement la puissance en empêchant la fourniture d'un signal de commande configuré pour contrôler l'état d'un commutateur du circuit d'alimentation (208).

7. Agencement selon l'une quelconque des revendications 1 à 4, dans lequel
l'agencement comprend en outre un second circuit de commande (418) configuré pour actionner le circuit d'alimentation (208), le second circuit de commande (418) étant configuré pour fournir un signal de commande afin d'actionner un ou plusieurs commutateurs du circuit d'alimentation (208), et
dans lequel le dispositif de contrôle (204) est configuré pour commander le circuit d'alimentation (208) de façon à limiter temporairement la puissance en modifiant un signal utilisé dans le second circuit de commande (418) comme base pour la fourniture du signal de commande.

8. Agencement selon la revendication 7,
dans lequel le signal utilisé comme base pour la fourniture du signal de commande est un signal indiquant un courant nul à la sortie du circuit d'alimentation (208) et dans lequel le second circuit de commande (418) est configuré pour fournir le signal de commande de façon à actionner en état de fermeture un commutateur parmi le ou les commutateurs de l'alimentation en réponse audit signal indiquant un courant nul, et
dans lequel ladite modification comprend le réglage dudit signal afin d'indiquer un courant non nul en réponse à la détection de la période de temps d'inactivité.

9. Agencement selon la revendication 7,
dans lequel le signal utilisé comme base pour la fourniture du signal de commande est un signal indiquant un courant maximal prédéterminé à la sortie du circuit d'alimentation (208) et dans lequel le second circuit de commande (418) est configuré pour fournir le signal de commande de façon à actionner en état d'ouverture un commutateur parmi le ou les commutateurs de l'alimentation en réponse audit signal indiquant un courant maximal prédéterminé, et
dans lequel ladite modification comprend le réglage dudit signal afin d'indiquer le courant maximal prédéterminé en réponse à la détection de la période de temps d'inactivité.

10. Agencement selon la revendication 7, dans lequel le signal utilisé comme base pour la fourniture du signal de commande
est un signal indicatif de la puissance consommée par la charge (206), et dans lequel ladite modification comprend le réglage dudit signal de façon à fournir une indication d'une puissance supérieure à la puissance observée en réponse à la détection de la période de temps d'inactivité.

11. Agencement selon l'une quelconque des revendications 1 à 10, comprenant en outre un détecteur de basse tension (520) configuré pour fournir une indication du fait qu'une tension aux bornes de la charge (206) tombe en dessous d'un seuil prédéterminé, et dans lequel le dispositif de contrôle (204) est configuré pour commander le circuit d'alimentation (208) de façon à limiter temporairement la puissance fournie par le circuit d'alimentation (208) à la charge (206) uniquement en réponse au fait que la tension aux bornes de la charge (206) tombe en dessous du seuil prédéterminé.

12. Agencement selon l'une quelconque des revendications 1 à 11, dans lequel le circuit en pont (306) est configuré pour alimenter une lampe à décharge à haute intensité.

13. Procédé pour actionner un circuit d'alimentation (208) configuré pour alimenter une charge (206), laquelle charge (206) est connectée en parallèle avec un dispositif capacitif (210) configuré pour agir comme une unité de stockage d'énergie configurée pour recevoir et stocker temporairement de l'énergie fournie par le circuit d'alimentation (208), et
laquelle charge (206) comprend un circuit en pont comprenant au moins une paire de commutateurs destinés à être commutés selon un cycle de commutation, le circuit en pont (306) étant configuré pour alimenter une seconde charge (312), le procédé comprenant les opérations suivantes :
détection d'une période de temps d'inactivité de la charge (206), dans lequel la période de temps d'inactivité correspond à une période de temps pendant le cycle de commutation lorsqu'aucun des commutateurs desdites une ou plusieurs paires de commutateurs ne se trouve en état de fermeture, et
commande temporaire du circuit d'alimentation (208) de façon à limiter, en réponse à la détection de la période de temps d'inactivité, la puissance fournie par le circuit d'alimentation (208) à la charge (206) et donc au dispositif capacitif (210).

14. Procédé selon la revendication 13, comprenant en outre la réception d'une indication du fait qu'une tension aux bornes de la charge (206) tombe en dessous d'un seuil prédéterminé, dans lequel la commande du circuit d'alimentation (208) de façon à limiter temporairement la puissance fournie par le circuit d'alimentation (208) comprend la commande temporaire du circuit d'alimentation (208) de façon à limiter la puissance uniquement en réponse au fait que la tension aux bornes de la charge (206) tombe en dessous du seuil prédéterminé.

15. Programme informatique pour actionner un circuit d'alimentation (208) configuré pour alimenter une charge (206),
laquelle charge (206) est connectée en parallèle avec un dispositif capacitif (210) configuré pour agir comme une unité de stockage d'énergie configurée pour recevoir et stocker temporairement de l'énergie fournie par le circuit d'alimentation (208), et
laquelle charge (206) comprend un circuit en pont (306) comprenant au moins une paire de commutateurs destinés à être commutés selon un cycle de commutation, le circuit en pont (306) étant configuré pour alimenter une seconde charge (312),
le programme informatique comprenant une ou plusieurs séquences d'une ou plusieurs instructions, lesquelles, lorsqu'elles sont exécutées par un ou plusieurs processeurs, amènent un appareil à exécuter au moins le procédé selon la revendication 13.
